# EUROPÄISCHE PATENTANMELDUNG

(11) **EP 1 744 069 A1**
(43) Veröffentlichungstag der Anmeldung: **17.01.2007**
(21) Anmeldenummer: 06014196.7
(22) Anmeldetag: 08.07.2006
(51) Int. Cl.: F16C 19/30, F16C 33/58, F16C 35/06

(54) **Axialwälzlageranordnung**

(30) Priorität: 12.07.2005 US 698343 P
(71) Anmelder: Schaeffler KG, 91074 Herzogenaurach (DE)
(72) Erfinder: Brown, James Kevin, Rock Hill SC 29730 (US); Crump, George, Fort Mill SC 29715 (US)

(57) **Zusammenfassung**

Die Erfindung betrifft eine Axiallageranordnung (2), umfassend einen mehrere Wälzkörper (6) haltenden Wälzkörperkäfig (4) und wenigstens eine Laufscheibe (8', 10"), wobei die Laufscheibe (8', 10") einen den Wälzkörperkäfig (4) mit Spiel axial umgreifenden Kragen (12) und am gegenüberliegenden Ende eine axial entgegen gerichtete Flanschanordnung aufweist, in deren Innenecke ein an der Laufscheibe (8', 10") anliegendes Bauteil zentrierbar ist.

Um eine aufwendige Bearbeitung der der Innenecke (22') zugewandten Umfangskante des anliegenden Bauteils zu vermeiden, ist vorgesehen, dass zumindest der die Flanschanordnung (18', 26) bildende Schenkel (19', 27) der Innenecke (22', 30) im Eckenbereich eine von dem zu zentrierenden Bauteil freigestellte Innenkontur hat.

## Beschreibung

### Gebiet der Erfindung

Die Erfindung betrifft eine Axiallageranordnung, umfassend einen mehrere Wälzkörper haltenden Wälzkörperkäfig und wenigstens eine Laufscheibe, wobei die Laufscheibe einen den Wälzkörperkäfig mit Spiel axial umgreifenden Kragen und am gegenüberliegenden Ende eine axial entgegen gerichtete Flanschanordnung aufweist, in deren Innenecke ein an der Laufscheibe anliegendes Bauteil zentrierbar ist.

### Hintergrund der Erfindung

Derartige Axiallageranordnungen dienen dazu, den von einem drehend in einem Gehäuse oder dergleichen gelagerten Bauteil aufgebrachten Axialschub aufzunehmen bzw. auf das Gehäuse zu übertragen. Ein typisches Anwendungsgebiet sind in einem Wellengehäuse oder dergleichen drehend gelagerte, axial belastete Wellen. Dabei wird die Axialkraft üblicherweise von einer an der Welle ausgebildeten, mit dieser umlaufenden Radialschulter über ein Axiallager auf eine am Wellengehäuse ausgebildeten ruhende Radialschulter übertragen.

Welle bzw. des Wellengehäuses ab, sondern auf dem Axiallager zugeordneten Laufscheiben, welche aus einem für die Lagerfunktion besonders geeigneten, beispielsweise gehärteten Material bestehen, so dass die Lagerfunktion unabhängig vom Material der Welle bzw. des Wellengehäuses sichergestellt ist. Bei einer Axiallageranordnung mit zwei Laufscheiben umgreift üblicherweise eine Laufscheibe mit einem axial ausgereichten Kragen den Wälzkörperkäfig mit Spiel am Außenumfang, während die andere Laufscheibe mit einem axial entgegen gerichteten Kragen den Wälzkörperkäfig mit Spiel am Innenumfang umgreift, wie hier nicht näher ausgeführt zu werden braucht und beispielhaft der Fig. 4 entnehmbar ist.

Es ist zudem bekannt, zumindest eine Laufscheibe einer Axiallageranordnung mit einem weiteren, achsparallel zur Lagerachse vom Wälzkörperkäfig fort abgebogenen Kragen bzw. einer solchen Flanschanordnung zu versehen, um beispielsweise eine der Axiallageranordnung zugeordnete Distanzscheibe gegenüber dem Axiallager oder das Axiallager selbst gegenüber der Welle oder dem Wellengehäuse zu zentrieren.

Die US 4,733,979 beschreibt und zeigt beispielsweise in deren Fig. 1 eine Axiallageranordnung, bei welcher am Innenumfang einer Laufscheibe ein Kragen ausgebildet ist, über die eine dem Axiallager zugeordnete Distanzscheibe innenzentriert wird. Die Distanzscheibe allgemein und der zum Zentrieren vorgesehene Kragen an der Laufscheibe sind offensichtlich durch Drücken oder Ziehen eines Blechbauteils hergestellt, wobei die durch den Kragen gebildete Innenecke eine abgerundete Innenkontur hat. Damit die dieser abgerundeten Innenkontur zugewandte Außenkante der Distanzscheibe von der Innenkontur frei bleibt, muss auch diese Außenkante abgerundet oder abgeschrägt sein, was einen zusätzlichen Bearbeitungsaufwand für die Distanzscheibe bedeutet.

Die DE 36 43 584 A1 zeigt insbesondere in deren Fig. 1 B eine Axiallageranordnung, bei der wiederum am Innenumfang einer Laufscheibe ein axial ausgerichteter Kragen ausgebildet ist, über den die Axiallageranordnung gegenüber einem festen Bauteil B innenzentriert wird. Wie diese Figur erkennen lässt, ist sowohl die Innenecke des Kragens der Laufscheibe als auch die dieser zugewandte Umfangskante des Bauteils B scharfkantig dargestellt. Im allgemeinen ist jedoch dann, wenn die Laufscheibe beispielsweise durch einen Stanz- und Drückvorgang aus einem Blechteil hergestellt wird, die Innenecke der Laufscheibe abgerundet, so dass in der Praxis auch hier die Umfangskante des Bauteils B abgerundet oder abgeschrägt sein muss, damit die Laufscheibe einerseits und das Bauteil B andererseits jeweils statisch bestimmt mit den dafür vorgesehenen Anlageflächen aneinander anliegen.

### Aufgabe der Erfindung

Der Erfindung liegt die Aufgabe zugrunde, eine Axiallageranordnung der im Oberbegriff des Anspruches 1 genannten Art zu schaffen, bei der eine aufwendige zusätzliche Bearbeitung eines mittels einer axial ausgerichteten Flanschanordnung an einer Laufscheibe zentrierten Bauteils mit geringem technischen Aufwand vermieden werden kann.

### Zusammenfassung der Erfindung

Der Erfindung liegt die Erkenntnis zugrunde, dass eine Freistellung der Innenecke einer axial ausgerichteten Flanschanordnung an einer Laufscheibe gegenüber der zugeordneten Außenkante des zu zentrierenden Bauteils mit geringerem technischem Aufwand über eine entsprechende Formgebung der Laufscheibe gewährleistet werden kann.

Die Erfindung geht daher aus von einer Axiallageranordnung, umfassend einen mehrere Wälzkörper haltenden Wälzkörperkäfig und wenigstens eine Laufscheibe, wobei die Laufscheibe einen den Wälzkörperkäfig mit Spiel axial umgreifenden Kragen und am gegenüberliegenden Ende eine axial entgegen gerichtete Flanschanordnung aufweist, in deren Innenecke ein an der Laufscheibe anliegendes Bauteil zentrierbar ist. Erfindungsgemäß ist dabei vorgesehen, dass zumindest der die Flanschanordnung bildende Schenkel der Innenecke im Eckenbereich eine von dem zu zentrierenden Bauteil freigestellte Innenkontur aufweist.

Dadurch kann eine Nachbearbeitung, wie eine Abrundung oder Abschrägung der der Innenecke zugeordneten Außenkante des zu zentrierenden Bauteils vermieden werden.

Die Flanschanordnung kann in an sich bekannter Weise als kontinuierlich über den Innenumfang bzw. Außenumfang der Laufscheibe sich erstreckender Ringflansch ausgebildet sein. Gemäß einer anderen Ausgestaltung ist vorgesehen, dass die Flanschanordnung aus mehreren in Umfangsrichtung verteilt angeordneten Ringflanschsegmenten besteht, so dass ohne eine Beeinträchtigung der Funktion der Flanschanordnung eine Material- und Gewichtseinsparung möglich ist, wie nicht im einzelnen dargestellt ist.

Die Flanschanordnung kann in Abhängigkeit von konstruktiven Vorgaben am Außenumfang und/oder am Innenumfang der Laufscheibe angeordnet sein, wie anhand von Ausführungsbeispielen dargelegt wird. Die erfindungsgemäße Flanschanordnung kann beispielsweise dazu dienen, eine Distanzscheibe gegenüber der Axiallageranordnung zu zentrieren. Eine andere denkbare Verwendung sieht vor, dass über die Flanschanordnung die Axiallageranordnung selbst gegenüber einem drehenden oder feststehenden Bauteil zentriert wird.

Gemäß einer herstellungstechnisch besonders einfachen und preiswerten Ausgestaltung der Erfindung ist vorgesehen, dass die Laufscheibe ein im Wesentlichen in einem Stanz- und Tiefzieharbeitsgang hergestellter Blechring ist. Dadurch wird die Möglichkeit eröffnet, die freigestellte Innenkontur ohne zusätzlichen Arbeitsschritt, also im gleichen Arbeitsgang mit der Ausbildung der den Wälzkörperkäfig übergreifenden Flansche und Kragen herzustellen.

### Kurze Beschreibung der Zeichnungen

Die Erfindung wird im Folgenden anhand der beiliegenden Zeichnungen an einigen bekannten bzw. erfindungsgemäßen Ausführungsformen näher erläutert. Darin zeigt
- Fig. 1: in einer schematischen Schnittansicht eine Axiallageranordnung mit einer an einer Laufscheibe ausgebildeten Flanschanordnung zum Zentrieren einer Distanzscheibe gemäß dem Stand der Technik,
- Fig. 2: eine Anordnung gemäß Fig. 1 mit einer erfindungsgemäß ausgestalteten Flanschanordnung,
- Fig. 3: eine Axiallageranordnung mit einer erfindungsgemäß ausgebildeten Flanschanordnung zum Zentrieren des Axiallagers gegenüber einem Bauteil, und
- Fig. 4: eine Axiallageranordnung mit einer außerhalb des Axiallagers zentrierten Distanzscheibe gemäß dem Stand der Technik.

### Detaillierte Beschreibung der Zeichnungen

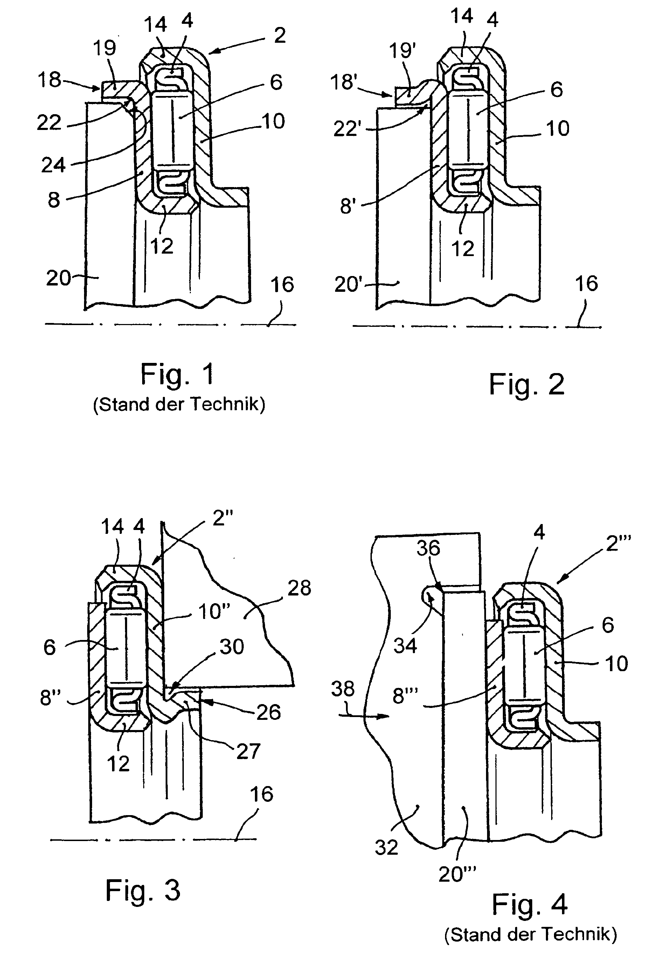

Die in Fig. 1 dargestellte bekannte Axiallageranordnung 2 umfasst einen Wälzkörperkäfig 4, welcher mit mehreren zylinderförmigen Wälzkörpern 6 bestückt ist, sowie eine erste Laufscheibe 8 und eine zweite Laufscheibe 10, die in Achsrichtung vor bzw. hinter dem Wälzkörperkäfig 4 angeordnet sind, diesen Wälzkörperkäfig 4 mit radialem Spiel zwischen sich aufnehmen und auf denen sich die Wälzkörper 6 abwälzen. An den Laufscheiben 8 bzw. 10 sind axial entgegengesetzt ausgerichtete Kragen 12 bzw. 14 ausgebildet, die den Wälzkörperkäfig 4 an dessen Innenumfang bzw. Außenumfang übergreifen.

An der Laufscheibe 8 ist eine achsparallel zur Lagerachse 16 vom Wälzkörperkäfig 4 fort abgebogene Flanschanordnung 18 ausgebildet, die dazu dient, einen Distanzring 20 gegenüber der Axiallageranordnung 2 zu zentrieren.

Wie die Fig. 1 erkennen lässt, ist die Flanschanordnung 18 durch einen Drück-oder Ziehvorgang an einem Blechteil gebildet, wobei durch den abgebogenen Schenkel 19 eine abgerundete Innenecke 22 ausgebildet ist. Damit die der Innenecke 22 zugeordnete Außenkante des Distanzringes 20 nicht zur Anlage an der Innenecke kommt, und damit eine statisch bestimmte Anlage der für die Axialkraftübertragung bestimmten Anlageflächen des Distanzringes 20 einerseits und der Laufscheibe 8 andererseits verhindert wird, ist diese Außenkante mit einer Abschrägung oder Fase 24 versehen. Diese Abschrägung oder Fase 24 erfordert einen gesonderten Arbeitsgang. Da beispielsweise moderne Automatikgetriebe eine Vielzahl derartiger, Herstellungstoleranzen ausgleichender Distanzringe aufweist, fällt dieser zusätzliche Bearbeitungsgang die Herstellkosten erhöhend ins Gewicht.

Fig. 2 zeigt eine Axiallageranordnung etwa gemäß der Fig. 1, jedoch mit einer erfindungsgemäßen Ausgestaltung der Flanschanordnung. Die bezüglich der Fig. 1 gleichen Bauteile der Fig. 2 sind jeweils mit den gleichen Bezugszeichen versehen und, sofern ihre Ausgestaltung und Funktion derjenigen in Fig. 1 gleich ist, nicht nochmals im einzelnen beschrieben. Den Bauteilen der Fig. 1 entsprechende, jedoch im Sinne der Erfindung abgewandelte Bauteile, sind mit den gleichen Bezugszeichen, jedoch versehen mit einem Strich, bezeichnet.

Wie die Fig. 2 erkennen lässt, ist der die Flanschanordnung 18' bildende Schenkel der Innenecke 22' so gestaltet, dass er im Eckenbereich eine gegenüber des Distanzringes 20' freigestellte Innenkontur hat. Diese Innenkontur wird beispielsweise auf die Weise hergestellt, dass die Abbiegung des die Flanschanordnung 18' bildenden Schenkels 19' mittels eines Zieh- oder Drückvorganges über eine entsprechende Außenkontur eines Formstempels oder dergleichen erfolgt.

Die in Fig. 2 dargestellte, die Innenecke 22' bildende Innenkontur ermöglicht es, den Distanzring 20' an der der Innenecke 22' zugewandten Umfangskante unbearbeitet zu lassen, wie sich ohne weiteres aus der Fig. 2 erkennen lässt.

Fig. 3 zeigt eine Axiallageranordnung ähnlich der Fig. 2, wobei wiederum bezüglich der Fig. 1 und Fig. 2 gleiche Bauteile mit gleichen Bezugszeichen versehen sind. Den Figuren 1 und 2 nur entsprechende, im Sinne der Erfindung abgewandelte Bauteile sind mit den gleichen, jedoch mit einem Doppelstrich versehenen Bezugszeichen gekennzeichnet.

Am Innenumfang der Laufscheibe 10" ist eine in Richtung achsparallel zur Lagerachse 16 vom Wälzkörperkäfig 4 fort abgebogene Flanschanordnung 26 ausgebildet, die dazu dient, die Axiallageranordnung 2" beispielsweise gegenüber einem feststehendem Bauteil 28 zu zentrieren. Der die Innenecke 30 bildende Schenkel 27 der Laufscheibe 10" ist beispielsweise durch Drücken oder Tiefziehen über einen mit einer entsprechenden Außenkontur versehenen Formstempel oder dergleichen gebildet, wie anhand der Fig. 2 bereits erläutert wurde.

Die in Fig. 3 dargestellte, die Innenecke 30 bildende Innenkontur ermöglicht es, die der Innenecke 30 zugewandte Umfangskante des zu zentrierenden Bauteils 28 unbearbeitet zu lassen, wobei sichergestellt ist, dass sich die für die Axialkraftübertragung vorgesehenen Flächen der Laufscheibe 10" einerseits und des zu zentrierenden Bauteils 28 andererseits statisch bestimmt aneinander legen.

Fig. 4 zeigt eine herkömmliche Axiallageranordnung, bei der ein dem Axiallager zugeordneter Distanzring außerhalb des Axiallagers zentriert ist. Die bezüglich der Fig. 1 gleichen Bauteile sind mit den gleichen Bezugszeichen bezeichnet, während der Fig. 1 entsprechende, jedoch unterschiedlich gestaltete Bauteile mit den gleichen, jedoch mit einem Dreifachstrich versehenen Bezugszeichen gekennzeichnet sind. Die Axiallageranordnung 2‴ umfasst wiederum einen Wälzkörperkäfig 4, einer ersten Laufscheibe 8‴ und einer zweiten der Laufscheibe 10, an denen sich die Wälzkörper 6 abwälzen.

Am der ersten Laufscheibe 8‴ liegt ein Distanzring 20‴ an. Dieser ist an einem Bauteil 32 zentriert, welches Teil der Gesamtkonstruktion ist und beispielsweise mit der umlaufenden Laufscheibe 8‴ und dem daran anliegenden Distanzring 20‴ umläuft. Wie die Fig. 4 erkennen lässt, ist die an dem Bauteil 32 ausgebildete Innenecke 34 durch einen verhältnismäßig aufwendigen Bearbeitungsvorgang so frei geschnitten, dass die dieser Innenecke zugewandte Umfangskante 36 des Distanzringes 20‴ freigestellt ist, so dass eine statisch bestimmte Anlage der die Axialkraft übertragenden Anlageflächen des Bauteils 32 einerseits und des Distanzringes 20‴ andererseits gewährleistet ist.

Ein weiterer Nachteil der in der Fig. 4 dargestellten bekannten Anordnung ist, dass der am Bauteil 32 zentrierte Distanzring 20‴ bei der Montage in Richtung des Pfeils 38 nicht sichtbar ist und blind montiert werden muss. Für diesen Fall erlaubt es eine erfindungsgemäße Ausgestaltung etwa entsprechend der Fig. 2, den Distanzring 20‴ bei geringem konstruktivem und fertigungstechnischem Aufwand am Axiallager zu zentrieren, wo er während der Montage sichtbar ist.

### Bezugszeichenliste

- 2: Axiallageranordnung
- 2": Axiallageranordnung
- 2‴: Axiallageranordnung
- 4: Wälzkörperkäfig
- 6: Wälzkörper
- 8: Erste Laufscheibe
- 8': Erste Laufscheibe
- 8": Erste Laufscheibe
- 8‴: Erste Laufscheibe
- 10: Zweite Laufscheibe
- 10": Laufscheibe
- 12: Axialflansch
- 14: Axialflansch
- 16: Lagerachse
- 18: Flanschanordnung
- 18': Flanschanordnung
- 19: Schenkel
- 19': Schenkel
- 20: Distanzring
- 20': Distanzring
- 20"': Distanzring
- 22: Innenecke
- 22': Innenecke
- 24: Abschrägung oder Fase
- 26: Flanschanordnung
- 27: Schenkel
- 28: Festes Bauteil
- 30: Innenecke
- 32: Bauteil
- 34: Innenecke
- 36: Umfangskante
- 38: Pfeil

## Patentansprüche

1. Axiallageranordnung (2), umfassend einen mehrere Wälzkörper (6) haltenden Wälzkörperkäfig (4) und wenigstens eine Laufscheibe (8', 10"), wobei die Laufscheibe (8', 10") einen den Wälzkörperkäfig (4) mit Spiel axial umgreifenden Kragen (12) und am gegenüberliegenden Ende eine axial entgegen gerichtete Flanschanordnung aufweist, in deren Innenecke ein an der Laufscheibe (8', 10") anliegendes Bauteil zentrierbar ist, **dadurch gekennzeichnet, dass** zumindest der die Flanschanordnung (18', 26) bildende Schenkel (19', 27) der Innenecke (22', 30) im Eckenbereich eine von dem zu zentrierenden Bauteil freigestellte Innenkontur hat.

2. Axiallageranordnung nach Anspruch 1, **dadurch gekennzeichnet, dass** die Flanschanordnung (18', 26) als Ringflansch ausgebildet ist.

3. Axiallageranordnung nach Anspruch 1, **dadurch gekennzeichnet, dass** die die Flanschanordnung (18', 26) aus mehreren in Umfangsrichtung verteilt angeordneten Ringflanschsegmenten besteht.

4. Axiallageranordnung nach einem der Ansprüche 1 bis 3, **dadurch gekennzeichnet, dass** die Flanschanordnung (18') am Außenumfang einer Laufscheibe (8') angeordnet ist.

5. Axiallageranordnung nach einem der Ansprüche 1 bis 3, **dadurch gekennzeichnet, dass** die Flanschanordnung (26) am Innenumfang einer Laufscheibe (10") angeordnet ist.

6. Axiallageranordnung nach einem der Ansprüche 1 bis 5, **dadurch gekennzeichnet, dass** die Flanschanordnung (18') mit einem Distanzring (20') zusammenwirkt.

7. Axiallageranordnung nach einem der Ansprüche 1 bis 6, **dadurch gekennzeichnet, dass** die Flanschanordnung (26) mit einem die Axiallageranordnung (2") zentrierenden Führungsbauteil (28) zusammenwirkt.

8. Axiallageranordnung nach einem der Ansprüche 1 bis 7, **dadurch gekennzeichnet, dass** die Laufscheibe (8', 10") ein im wesentlichen in einem Stanz- und Tiefzieharbeitsgang hergestellter Blechring ist.
